(19) Europäisches Patentamt

European Patent Office

Office européen des brevets

(11) **EP 1 081 338 B1**

(12) **EUROPÄISCHE PATENTSCHRIFT**

(45) Veröffentlichungstag und Bekanntmachung des Hinweises auf die Patenterteilung:
**08.03.2006 Patentblatt 2006/10**

(51) Int Cl.:
***F01K 17/02*** *(2006.01)*

(21) Anmeldenummer: **00119014.9**

(22) Anmeldetag: **01.09.2000**

(54) **Verfahren zum Betrieb einer Anlage mit mindestens einem Dampferzeuger und mindestens einem Stromerzeuger**

Method for operating a plant with at least one steam generator and at least one electric generator

Procédé pour le fonctionnement d'une centrale avec au moins un générateur de vapeur et au moins un générateur électrique

(84) Benannte Vertragsstaaten:
**AT BE CH CY DE DK ES FI FR GB GR IE IT LI LU MC NL PT SE**

(30) Priorität: **03.09.1999 DE 19942114**

(43) Veröffentlichungstag der Anmeldung:
**07.03.2001 Patentblatt 2001/10**

(73) Patentinhaber: **SIEMENS AKTIENGESELLSCHAFT**
**80333 München (DE)**

(72) Erfinder:
• **Helling, Ralf, Dipl.-Ing. (FH)**
**44627 Herne (DE)**
• **Henstorf, Burkhard**
**63456 Hanau (DE)**
• **Horn, Thomas, Dipl.-Ing.(FH)**
**63526 Erlensee-Rückingen (DE)**
• **Huth, Reinhold, Dipl.-Ing.**
**63456 Steinheim (DE)**
• **Niegisch, Karl-Josef**
**63594 Hasselroth (DE)**
• **Pohlmann, Helmut, Dipl.-Ing.**
**63128 Dietzenbach (DE)**
• **Schnaudt, Lothar, Dipl.-Ing.**
**63456 Hanau (DE)**
• **Vey, Ulrich**
**64572 Büttelborn (DE)**

(56) Entgegenhaltungen:
**EP-A- 0 704 777        EP-A- 0 704 778**

• **G. KLEFENZ: "Die Regelung von Dampfkraftwerken" 1983 , BIBLIOGRAFISCHES INSTITUT , MANNHEIM, DE XP002233145 * Seite 193 - Seite 197 ***

EP 1 081 338 B1

**Beschreibung**

Die vorliegende Erfindung betrifft ein Verfahren zum Betrieb einer Anlage, die mindestens einen Dampferzeuger und mindestens einen Stromerzeuger zum Umwandeln von Dampf in elektrische Leistung sowie Verbraucher von Dampf und elektrischer Leistung aufweist und zum Austausch elektrischer Leistung mit einem übergeordneten Netz verbindbar ist.

Eine derartige Anlage, die beispielsweise aus der EP 0 704 777 A1 oder aus der EP 0 704 778 A1 bekannt ist, kann insbesondere eine Industrieanlage sein, beispielsweise eine Raffinerie. Für den reibungslosen Betrieb der Industrieanlage ist eine sichere Versorgung mit Dampf und elektrischer Leistung unerläßlich. Im Regelfall besteht ein Gleichgewicht zwischen der erzeugten und der benötigten Leistung. Dieses Gleichgewicht kann allerdings durch verschiedene Ursachen gestört werden. Störfälle können insbesondere Dampfmangel durch Ausfall von Dampferzeugern oder Zuschalten weiterer Verbraucher von Dampf, Mangel an elektrischer Leistung durch Ausfall von Stromerzeugern oder Zuschalten von Verbrauchern elektrischer Leistung und/oder eine Trennung vom übergeordneten Netz bei vorherigem Bezug von Leistung aus dem Netz und gleichzeitigem Verbrauch elektrischer Leistung über die momentan erzeugbare elektrische Leistung hinaus sein.

Bei den bekannten Betriebsverfahren wird lediglich basierend auf elektrischen Meßgrößen die Erzeugung elektrischer Leistung und/oder der Bezug von elektrischer Leistung aus dem übergeordneten Netz variiert. Ein Mangel an Dampf ist mit diesen bekannten Verfahren nicht beherrschbar und darf daher systembedingt nicht auftreten. Im Regelfall werden daher bei den bekannten Anlagen die Dampferzeuger deutlich überdimensioniert. Dies führt zu erhöhten Kosten zum Errichten und beim Betreiben der Anlage.

Aufgabe der vorliegenden Erfindung ist es daher, ein Verfahren zum Betrieb einer Anlage vorzuschlagen, bei dem auch mit geringerer installierter Leistung zur Erzeugung von Dampf ein zuverlässiger Betrieb gewährleistet ist.

Erfindungsgemäß wird diese Aufgabe bei einem Verfahren der eingangs genannten Art dadurch gelöst, daß zum Vermeiden von Engpässen bei der Versorgung der Verbraucher die Leistung der Dampferzeuger und die den Stromerzeugern zugeführte Menge an Dampf verändert wird.

Die Erfindung sieht erstmals eine gemeinsame Betrachtung der Erzeugung und des Verbrauchs von Strom und Dampf vor. Bei der Betrachtung von Erzeugung und Verbrauch von Strom wird erstmals auch der aus der Bilanz "Erzeugung-Verbrauch" entstehende Einfluß auf die Netzfrequenz bei Inselbetrieb berücksichtigt. Es wird nicht mehr alleine die elektrische Leistung in Abhängigkeit von den Umständen angepaßt, sondern auch die Umwandlung von Dampf in elektrische Leistung berücksichtigt.

Vorteilhafte Ausgestaltungen und Weiterbildungen der Erfindung gehen aus den abhängigen Ansprüchen hervor.

Vorteilhaft wird zum Vermeiden von Engpässen bei der Dampfversorgung die den Stromerzeugern zugeführte Menge an Dampf verringert. Diese Verringerung wird selbstverständlich nur dann vorgenommen, wenn die Eigenerzeugung an Dampf nicht mehr ausreichend zum Versorgen der Verbraucher von Dampf und der Stromerzeuger ist. Hierdurch werden dampfseitige Engpässe zuverlässig vermieden.

In vorteilhafter Weiterbildung wird zum Vermeiden von Engpässen bei der Stromversorgung die Lieferung elektrischer Leistung an das übergeordnete Netz verringert oder der Bezug elektrischer Leistung aus dem übergeordneten Netz erhöht. Die Versorgung der Verbraucher von Dampf bleibt weiterhin gewährleistet, während die Verbraucher elektrischer Leistung entweder aus der Eigenerzeugung oder aus dem übergeordneten Netz versorgt werden. Wird elektrische Leistung an das übergeordnete Netz geliefert, so wird diese zur Vermeidung von Engpässen zuunächst verringert, gegebenenfalls bis auf Null. Falls diese Verringerung nicht ausreicht, wird mit dem Bezug elektrischer Leistung aus dem übergeordneten Netz begonnen.

Gemäß einer vorteilhaften Weiterbildung werden Verbraucher einer funktionellen Einheit zu einer festen Abschaltgruppe zusammengefaßt. Jede feste Abschaltgruppe kann dann wie ein Einzelverbraucher behandelt werden.

Nach einer vorteilhaften Ausgestaltung werden zum Vermeiden von Engpässen einer oder mehrere Verbraucher von Dampf und/oder elektrischer Leistung abgeschaltet. Dieses Abschalten wird erst dann vorgenommen, wenn die Eigenerzeugung der Anlage nicht mehr ausreichend ist, um die erforderliche Versorgung mit Dampf und elektrischer Leistung sicherzustellen. Das Abschalten verhindert insbesondere ein Zusammenbrechen des Dampfdrucks, den Bezug von elektrischer Leistung aus dem übergeordneten Netz über einen zulässigen Betrag hinaus sowie das Zusammenbrechen des elektrischen Netzes der Anlage im Inselbetrieb. Es wird erst dann vorgenommen, wenn abzusehen ist, daß die weiteren Möglichkeiten nicht ausreichend sind.

Vorteilhaft sind entsprechend der Art und des Entstehungsortes des Mangels unabhängige Vorrangprioritätslisten vorhanden. Hierdurch wird sichergestellt, daß entsprechend des aufgetretenen Mangels durch Abschalten der richtigen Verbraucher der gewünschte Erfolg erreicht wird.

Vorteilhaft wird jedem Verbraucher und/oder jeder Abschaltgruppe in jeder Vorrangprioritätsliste eine eigene Vorrangpriorität zugewiesen. Durch entsprechende Vergabe der Vorrangpriorität wird sichergestellt, daß zunächst unkritische Verbraucher abgeschaltet werden, und der Betrieb der Anlage im großen Umfang im wesentlichen unbeeinträchtigt fortgesetzt werden kann.

Nach einer vorteilhaften Ausgestaltung ist die Vorrangpriorität von Einzelverbrauchern beziehungsweise Abschaltgruppen im laufenden Betrieb der Anlage veränderbar. In Abhängigkeit von den Randbedingungen, beispielsweise der Außentemperatur, dem Betriebszustand der Anlage oder weiteren Parametern kann dann gezielt auf jeweils auftretende Engpässe reagiert werden.

Vorteilhaft werden sämtliche abzuschaltenden Verbraucher und Abschaltgruppen gleichzeitig abgeschaltet. Das erfindungsgemäße Verfahren prüft zunächst, ob ein drohender Engpaß durch ein Erhöhen der Eigenerzeugung von Dampf sowie gegebenenfalls eine Verringerung der Eigenerzeugung von elektrischer Leistung aufgefangen werden kann. Ist dies nicht der Fall, wird überprüft, welche Verbraucher abgeschaltet werden sollen. Ein mehrfaches Abschalten von Verbrauchern wird vermieden.

In vorteilhafter Ausgestaltung wird der Bezug von elektrischer Leistung aus dem übergeordneten Netz begrenzt. In vielen Fällen ist in der Praxis der Bezug und die Lieferung von elektrischer Leistung durch Verträge geregelt. Diese Verträge sehen im Regelfall jeweils eine Obergrenze vor. Bei Überschreiten dieser Obergrenze drohen nicht nur Vertragsstrafen, sondern auch Störungen in dem übergeordneten Netz. Das erfindungsgemäße Verfahren berücksichtigt die festgelegte Obergrenze für den Bezug elektrischer Leistung aus dem übergeordneten Netz und verhindert die bei einem Überschreiten auftretenden Nachteile.

Vorteilhaft ist nach dem Abschalten eines oder mehrerer Verbraucher ein manuelles Quittieren für ein erneutes Anschalten erforderlich. Das erfindungsgemäße Verfahren nimmt somit ein automatisches Abschalten eines oder mehrerer Verbraucher vor. Hierdurch ist ein reibungsloser Betrieb der Anlage gewährleistet. Aus Sicherheitsgründen werden allerdings abgeschaltete Verbraucher nicht automatisch wieder angeschaltet, sondern erst nach einem Quittieren durch das Bedienpersonal. Hierdurch wird ein ständiges An- und Abschalten von Verbrauchern vermieden.

Nachstehend werden die zur Durchführung des erfindungsgemäßen Verfahrens erforderlichen Berechnungen beschrieben. Die verwendeten Bezugszeichen beziehen sich auf das in der Zeichnung dargestellte Ausführungsbeispiel.

Berechnung des Mangels

Erkennen von Dampfmangel an dem Dampfsammler 12

-Erstes Erkennungskriterium

Das erfindungsgemäße Verfahren schaltet die Verbraucher ab, wenn $\Delta m_v < 0$ ist.
Dabei ist zu beachten, daß die Übergabeleistung negativ ist, wenn aus dem übergeordneten Netz 20 elektrische Leistung bezogen wird.

$$(1)\quad \Delta m_{v(60)} = CL_{CB(60)} - m_{D(60)} + MAX\ [\ 0,\ c_1\ (\ P_{NETZ} - P_{NETZmin}\ )\ ] +$$
$$m_{DIS} \qquad\qquad .\qquad\qquad + m_{D(RED)}$$

mit

| | |
|---|---|
| $\Delta m_{v(60)}$ : | Dampffehlbetrag (bei Fehlen von Dampf negativ) dem Dampfsammler 12 |
| $CL_{CB(60)}$ : | Summe Kannlast der Dampferzeuger 11 |
| $m_{D(60)}$ : | Summe Dampfstrom der Dampferzeuger 11 |
| $P_{NETZ}$ : | Übergabeleistung an das übergeordnete Netz 20 |
| $P_{NETZmin}$ : | minimal zulässige Übergabeleistung an das übergeordnete Netz 20 |
| $c_1$ : | Umrechnungsfaktor von MW in Kg/s. |
| $m_{DIS}$ : | zulässige kleine Störungen |
| $M_{D(RED)}$ : | Summe Dampfstrom der Dampfumformstation 17 |

Daraus ergeben sich folgende Maßnahmen vor der Abschaltung von Verbrauchern:

Änderung des Dampfstromes über die Dampfumformstation 17 in der Höhe von

$$(1a)\quad \Delta m_{v(RED)} = MIN(\ 0,\ MAX\ ((CL_{CB(60)} - m_{D(60)}\ ),\ -m_{D(RED)}\ ))$$

Änderung der Übergabeleistung an der Verbindungsstelle 19 zum übergeordneten Netz 20 um

$$(1b) \quad \Delta P_{(NETZ)} = MAX \ (MIN \ (0, \ P_{NETZmin} - P_{NETZ}), \ MIN \ (0, \ (CL_{CB(60)} - m_{D(60)} + m_{DIS} - \Delta m_{V(RED)} \ ) \ / \ c1))$$

-Zweites Erkennungskriterium

Die Abschaltung von Verbrauchern über dieses Erkennungskriterium wird solange blockiert, wie eine Abschaltung über das Erste Erkennungskriterium erfolgen kann.
Das erfindungsgemäße Verfahren schaltet die Verbraucher ab, wenn $\Delta m_V < 0$ ist.
Die Freigabe der Rechenschaltung erfolgt mit:

$$Xd_{p(60)} > Xd_{pMAX(60)}$$

mit

$Xd_{p(60)}$ :      Regeldifferenz des Sammelschienendruckes Dampfschiene 12
$Xd_{pMAX(60)}$ :      Grenzwert für maximale Regeldifferenz der Dampfschiene 12

$$(1c) \quad \Delta m_{v(60)} = MIN \ (0, \ (K_{V(60)} \ x \ grad \ p_{(60)} \ + \ MAX \ [ \ 0, \ c_1 \ x \ ( P_{NETZ} \ - \ P_{NETZmin} \ ) ] \ + \ m_{DIS} \ + \ m_{D(RED)})$$

mit

$K_{V(60)}$ :      Speicherkonstante dem Dampfsammler 12
grad $p_{(60)}$ :      Gradient des Sammelschienendruckes der Dampfschiene 12 [$p(t_2)$ - $p(t_1)$]

Vor Abschaltung von Verbrauchern ergeben sich wiederum die Maßnahmen entsprechend der Gleichungen (1a), (1b)

Erkennen von Dampfmangel an dem Dampfsammler 15

-Erstes Erkennungkriterium

Das erfindungsgemäße Verfahren schaltet die Verbraucher ab, wenn $\Delta m_V < 0$ ist.

$$(2) \quad \Delta m_{v(19)} = CL_{CB(19)} - m_{D(19)} \ + \ MIN \ ( \ MAX( \ 0, \ CL_{CB(60)} \ - \ m_{D(60)}), \ CL_{RED} - m_{D(RED)}) \ + \ m_{DIS}$$

mit

$\Delta m_{v(19)}$ :      Dampffehlbetrag (bei Fehlen von Dampf negativ) dem Dampfsammler 15
$CL_{CB(19)}$ :      Summe Kannlast des Dampferzeugers 24
$m_{D(19)}$ :      Summe Dampfstrom des Dampferzeugers 24   $CL_{CB(60)}$ : Summe Kannlast der Dampferzeuger 11
$m_{D(60)}$ :      Summe Dampfstrom der Dampferzeuger 11
$m_{DIS}$ :      zulässige kleine Störungen
$CL_{RED}$ :      Summe Kannlast der Dampfumformstation 17
$m_{D(RED)}$ :      Summe Dampfstrom der Dampfumformstation 17

Daraus ergeben sich folgende Maßnahmen vor der Abschaltung von Verbrauchern:

Erhöhung des Dampfstromes über die Dampfumformstation 17 in der Höhe von

$$(2a) \quad \Delta m_{v(RED)} = MAX\ (0,\ MIN\ (m_{D(19)} - CL_{CB(19)}\ ,\ MIN\ (\ MAX(\ 0,\ CL_{CB(60)} - m_{D(60)}),\ CL_{RED} - m_{D(RED)})) - m_{DIS})$$

-Zweites Erkennungskriterium

Die Abschaltung von Verbrauchern über dieses Erkennungskriterium wird solange blockiert, wie eine Abschaltung über das Erste Erkennungskriterium erfolgen kann.
Das erfindungsgemäße Verfahren schaltet die Verbraucher ab, wenn $\Delta m_V < 0$ ist .
Die Freigabe der Rechenschaltung erfolgt mit :

$$Xd_{p(19)} > Xd_{pMAX(19}$$

mit

$Xd_{p(19)}$ :        Regeldifferenz des Sammelschienendruckes Dampfschiene 15
$Xd_{pMAX(19)}$ :        Grenzwert für maximale Regeldifferenz Dampfschiene 15

$$(2b) \quad \Delta m_{v(19)} = K_{v(19)}\ x\ grad\ p_{(19)} + MIN\ (\ MAX(\ 0,\ CL_{CB(60)} - m_{D(60)}),\ CL_{RED} - m_{D(RED)}) + m_{DIS}$$

mit

$\Delta m_{v(19)}$ :        Dampffehlbetrag (bei Fehlen von Dampf negativ) Dampfsammler 15
$K_{V(19)}$ :        Speicherkonstante des Dampfsammlers 15
$grad\ p_{(19)}$ :        Gradient des Sammelschienendruckes Dampfsammler 15 $[p(t_2) - p(t_1)]$.

Vor Abschaltung von Verbrauchern ergeben sich wiederum die Maßnahmen entsprechend der Gleichung (2a)

Erkennen von elektrischem Mangel an der Übergabestelle 19 /übergeordnetes Netz 20

-Erkennungskriterium

Das erfindungsgemäße Verfahren schaltet die Verbraucher ab, wenn $\Delta P_{el(NETZ)} < 0$ ist.
Dabei ist zu beachten, daß die Übergabeleistung negativ ist, wenn aus dem übergeordneten Netz 20 elektrische Leistung bezogen wird.

$$(3) \quad \Delta P_{el(NETZ)} = CL_{TG} - P_{TG} + P_{NETZ} - P_{NETZmin} + p_{DIS}$$

mit

$\Delta P_{el(NETZ)}$ :        Fehlbetrag elektrischer Leistung an der Übergabestelle Verbindung 19 / Netz 20
$CL_{TG}$ :        Summe Kannlast Turbinen 13/ Generatoren 14
$P_{TG}$ :        Summe verzögerte Istlast Turbinen 13/ Generatoren 14
$P_{NETZ}$ :        verzögerte Übergabeleistung an das übergeordnete Netz 20
$P_{NETZmin}$ :        minimale Übergabeleistung an das Übergeordnete Netz 20

$p_{DIS}$ :          zulässige kleine Störungen

Daraus ergeben sich folgende Maßnahmen vor der Abschaltung von Verbrauchern:

Änderung der elektrischen Leistung an der Übergabestelle um

$$(3a) \quad \Delta P_{el} = MAX \ (CL_{TG} - P_{TG} \ , \ P_{NETZmin} - P_{NETZ} )$$

Elektrischer Mangel im Inselbetrieb, Verbindung 19 zum übergeordneten Netz 20 geöffnet

-Erstes Erkennungskriterium

Das erfindungsgemäße Verfahren schaltet die Verbraucher ab, wenn $\Delta P_{el(Insel)} < 0$ ist.
Dabei ist zu beachten, daß die Übergabeleistung negativ ist, wenn aus dem übergeordneten Netz 20 elektrische Leistung bezogen wird.

$$(4) \quad \Delta P_{el(Insel)} = CL_{TG} - P_{TG} + P_{NETZ} + p_{DIS}$$

mit

$\Delta P_{el(Insel)}$ :      Fehlbetrag elektrische Leistung im Inselbetrieb
$CL_{TG}$ :         Summe Kannlast Turbinen 13 /Generatoren 14
$P_{TG}$ :          Summe verzögerte Istlast Turbinen 13/ Generatoren 14
$P_{NETZ}$ :       verzögerte Übergabeleistung an das übergeordnete Netz 20 vor Eintreten des Inselbetriebes
$p_{DIS}$ :         zulässige kleine Störungen

-Zweites Erkennungskriterium

Die Abschaltung von Verbrauchern über dieses Erkennungskriterium wird solange blockiert, wie eine Abschaltung über das Erste Erkennungskriterium erfolgen kann.
Die Freigabe zur Abschaltung von Verbrauchern erfolgt mit der Bedingung

$$f_{(Insel)} < f_{min(Insel)}$$

mit

$f_{(Insel)}$ :      Frequenz des Inselnetzes (berechnet aus den Einzelfrequenzen der Generatoren 14
$f_{min(Insel)}$ :    untere Grenzfrequenz des Inselnetzes

Das erfindungsgemäße Verfahren schaltet die Verbraucher ab, wenn der berechnete Fehlbetrag der Frequenz $\Delta P_f < 0$ beträgt. Der Fehlbetrag der Frequenz [MW] wird wie folgt berechnet :

$$(4a) \quad \Delta P_{f\ (Insel)} = K_{E(Insel)} \ x \ ( \ f_{(Insel)} - 60 \ Hz) + p_{DIS}$$

mit

$\Delta P_{f(Insel)}$ :     Fehlbetrag des Inselnetzes [MW]
$K_{E(Insel)}$ :      Stabilitätskonstante des Inselnetzes als Funktion f(Anzahl Generatoren 14, Summe elektrischer Eigenbedarf, Überlastfaktor Turbinen 13, Trägheitsmomente)
$f_{(Insel)}$ :        Frequenz des Inselnetzes

60 Hz : Nennfrequenz des Inselnetzes

$P_{DIS}$ : zulässige kleine Störungen

Nachstehend wird die Erfindung anhand eines Ausführungsbeispiels näher beschrieben, das in schematischer Weise in der Zeichnung dargestellt ist. Dabei zeigt:

FIG 1 eine schematische Darstellung einer Anlage,

FIG 2 ein Flußdiagramm des erfindungsgemäßen Verfahrens und

FIG 3 ein Ablaufschema des Zuweisens der Vorrangprioritäten einzelner Verbraucher.

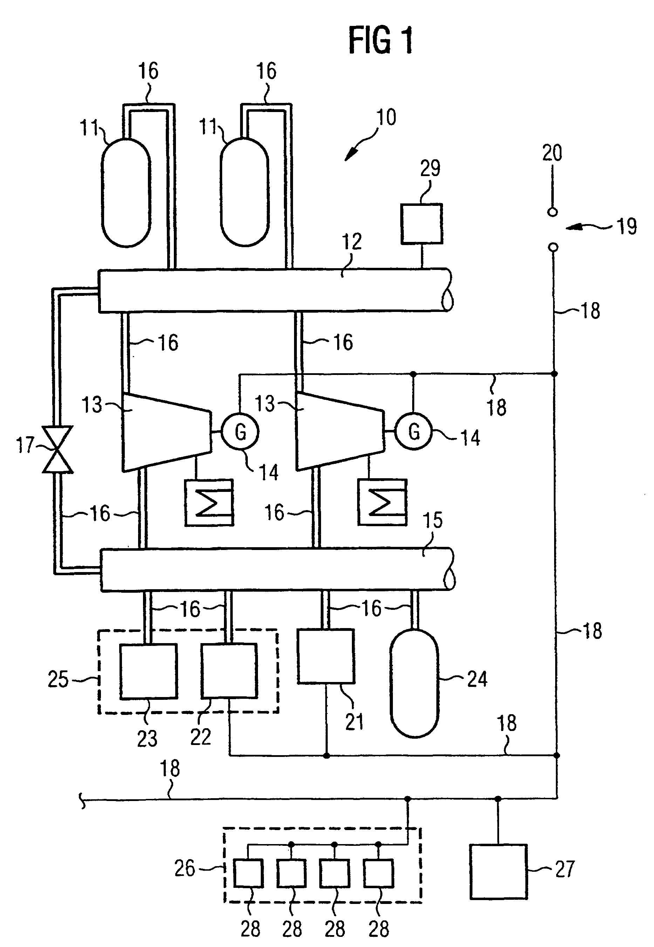

Figur 1 zeigt eine schematische Ansicht einer Anlage 10 mit zwei Dampferzeugern 11 sowie zwei Turbinen 13 mit zugeordneten Generatoren 14 zum Umwandeln von Dampf in elektrische Leistung. Die Anlage 10 umfaßt weiter Verbraucher 21, 22, die sowohl Dampf als auch elektrische Leistung benötigen. WeitereVerbraucher 23, 29 benötigen lediglich Dampf, und wiederum andere Verbraucher 27, 28 benötigen nur eine Versorgung mit elektrischer Leistung.

Der von den Dampferzeugern 11 erzeugte Dampf wird über Rohre 16 einem ersten Dampfsammler 12 zugeführt. Der Druck in diesem ersten Dampfsammler 12 liegt beispielsweise bei 60 bar. Der Dampf wird von dem Dampfsammler 12 über weitere Rohre 16 dem Eintrittsende der Turbinen 13 zugeführt. Ein Verbraucher 29 wird von dem Dampfsammler 12 versorgt. Am Entnahmeaustritt der Turbinen 13 wird der reduzierte Dampf über weitere Rohre 16 einem zweiten Dampfsammler 15 zugeführt. Der Druck in diesem zweiten Dampfsammler 15 liegt etwa bei 19 bar. Zur Grundversorgung und Druckregelung dieses Dampfsammlers 15 ist ein Dampferzeuger 24 über ein weiteres Rohr 16 direkt mit dem Dampfsammler 15 verbunden. Ein weiteres Rohr 16, verbunden mit dem Dampfsammler 12, weist eine Dampfumformstation 17 zur weiteren Grundversorgung des Dampfsammlers 15 auf. Im dargestellten Ausführungsbeispiel sind die Verbraucher 21, 22, 23 über Rohre 16 an den zweiten Dampfsammler 15 angeschlossen. In Abhängigkeit vom Anwendungsfall können weitere Verbraucher vorgesehen sein, die an die Dampfsammler 12 oder 15 angeschlossen sind.

Die von den Generatoren 14 bereitgestellte elektrische Leistung wird über Leitungen 18 verteilt. Die Leitungen 18 verlaufen zu den Verbrauchern 21, 22, 27, 28. Sie weisen weiter einen Anschluß 19 zur Verbindung mit einem übergeordneten Netz 20 auf. Der Anschluß 19 ermöglicht einen Austausch elektrischer Leistung zwischen den Leitungen 18 und dem übergeordneten Netz 20. Die maximal austauschbare elektrische Leistung ist begrenzt.

Es kann beim Betrieb der Anlage 10 zu Engpässen bei der Versorgung mit Dampf sowie gleichzeitig oder alternativ zu Engpässen bei der Versorgung mit elektrischer Leistung kommen. Sobald die Eigenerzeugung der Anlage 10 zusammen mit dem Bezug von elektrischer Leistung aus dem übergeordneten Netz 20 nicht mehr zur Versorgung aller Verbraucher 21, 22, 23, 27, 28, 29 ausreicht, müssen einer oder mehrere der Verbraucher 21, 22, 23, 27, 28, 29 abgeschaltet werden. Wird keine derartige Abschaltung vorgenommen, kann der Dampfdruck in den Dampfsammlern 12, 15 drastisch einbrechen, so daß die Turbinen 13 und die Generatoren 14 nicht mehr betrieben werden können. Dies führt ebenfalls zu einem vollständigen Ausfall der Eigenerzeugung an elektrischer Leistung. Da der Bezug von elektrischer Leistung aus dem übergeordneten Netz 20 begrenzt ist, kommt die Anlage 10 dann vollständig zum Stillstand.

Die Verbraucher 22, 23 stellen eine funktionelle Einheit dar und können deshalb nur gemeinsam betrieben werden. Sie sind in einer Abschaltgruppe 25 zusammengefaßt. Die Verbraucher 28 einer weiteren funktionellen Einheit sind in einer Abschaltgruppe 26 zusammengefaßt.

Es wird jedem Verbraucher 21, 27, 29 und jeder Abschaltgruppe 25, 26 in jeder Vorrangprioritätsliste eine eigene Vorrangpriorität zugewiesen. Mit diesen verschiedenen Vorrangprioritätslisten wird erreicht, daß entsprechend der Art und des Ortes des aufgetretenen Mangels die Abschaltung von Verbrauchern optimal angepaßt wird. Die Vorrangpriorität ist um so höher, je wichtiger der jeweilige Verbraucher für den Betrieb der Anlage 10 ist. Die Abschaltfolge beginnt mit der Vorrangpriorität "1".

Beim Vergeben der Vorrangpriorität werden anlagenspezifische Parameter berücksichtigt.

Das Abschalten von Verbrauchern 21, 27, 29 und Abschaltgruppen 25, 26 wird erst dann vorgenommen, wenn die Anlage 10 zusammen mit dem Bezug von elektrischer Leistung aus dem übergeordneten Netz 20 nicht genug Dampf und elektrische Energie für alle aktiven Verbraucher 21, 27, 29 und Abschaltgruppen 25, 26 bereitstellen kann.

Selbstverständlich können auch Verbraucher vorhanden sein, die nur bei einem vollständigen Betriebsstop der Anlage 10 oder gar nicht abgeschaltet werden dürfen. Diesen Verbrauchern wird eine entsprechende Vorrangpriorität zugewiesen, die ein Abschalten ausschließt. Alternativ können diese Verbraucher derart angeschlossen werden, daß ein Abschalten bei Engpässen durch das erfindungsgemäße Verfahren nicht möglich ist.

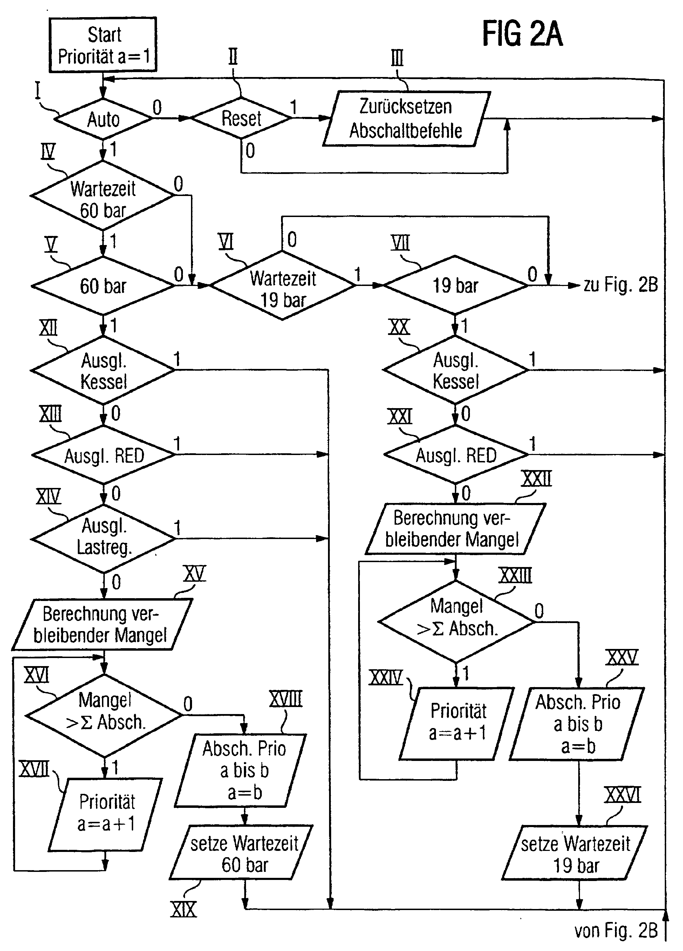

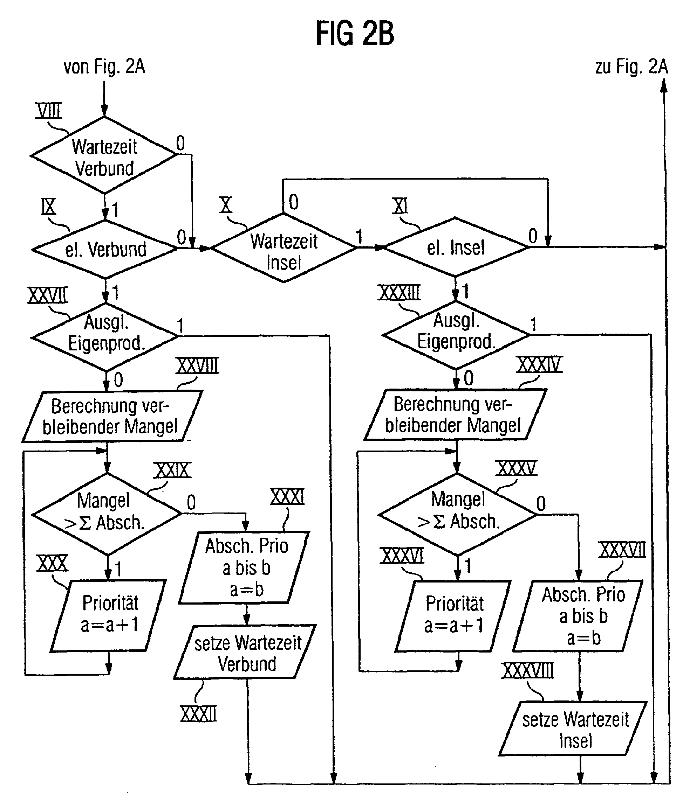

In Figur 2 ist ein Flußdiagramm des erfindungsgemäßen Verfahrens zum Betrieb der Anlage dargestellt. Im Schritt I wird zunächst geprüft, ob sich das erfindungsgemäße Verfahren im Modus Automatik befindet. Ist dieses nicht der Fall, wird gemäß Abzweigung 0 im Schritt II geprüft, ob manuelles Quittieren zum Rücksetzen der Abschaltbefehle betätigt ist. Gemäß Abzweigung 1 erfolgt das Zurücksetzen aller Abschaltbefehle im Schritt III. Anschließend springt das Programm zurück zur Startsequenz.

Befindet sich das erfindungsgemäße Verfahren im Modus Automatik, erfolgt gemäß Abzweigung 1 des Schrittes I im Schritt IV die Prüfung, ob in Schritt XVIII ein Abschaltvorgang vorgenommen und die in Schritt XIX gesetzte und angestoßene Wartezeit abgelaufen ist. Ist dies der Fall, wird im Schritt V zunächst geprüft, ob derzeit ein Engpaß bei der Versorgung des Dampfsammlers 12 vorhanden ist oder kurzfristig auftreten wird. Falls kein Engpaß vorliegt oder zu erwarten ist, wird gemäß Abzweigung 0 in den Schritt VI gesprungen. War die Wartezeit im Schritt IV noch nicht abgelaufen, wird der Schritt V übersprungen und direkt in den Schritt VI gegangen.

Im Schritt VI wird abgefragt, obin Schritt XXV ein Abschaltvorgang vorgenommen und die in Schritt XXVI gesetzte und angestoßene Wartezeit abgelaufen ist. Ist dies der Fall, wird gemäß Abzweigung 1 in den Schritt VII gesprungen und dort geprüft, ob derzeit ein Engpaß bei der Versorgung des Dampfsammlers 15 vorhanden ist oder kurzfristig auftreten wird. Wenn auch hier kein Mangel vorliegt, wird entsprechend Abzweigung 0 in den Schritt VIII gesprungen. War die Wartezeit im Schritt VI noch nicht abgelaufen, wird der Schritt VII übersprungen und direkt in den Schritt VIII gegangen.

Im Schritt VIII wird abgefragt, obin Schritt XXXI ein Abschaltvorgang vorgenommen und die in Schritt XXXII gesetzte und angestoßene Wartezeit abgelaufen ist. Ist dies der Fall, wird gemäß Abzweigung 1 in den Schritt IX gesprungen und dort geprüft, ob derzeit ein Engpaß bei der Versorgung mit elektrischer Leistung im Verbundbetrieb mit dem externen Netz 20 vorhanden ist oder kurzfristig auftreten wird. Liegt kein Engpaß vor, wird entsprechend Abzweigung 0 in den Schritt X gesprungen. War die Wartezeit im Schritt VIII noch nicht abgelaufen, wird der Schritt IX übersprungen und direkt in den Schritt X gegangen.

Im Schritt X wird abgefragt, obin Schritt XXXVII ein Abschaltvorgang vorgenommen und die in Schritt XXXVIII gesetzte und angestoßene Wartezeit abgelaufen ist. Ist dies der Fall, wird gemäß Abzweigung 1 in den Schritt XI gesprungen und dort geprüft, ob derzeit ein Engpaß bei der Versorgung mit elektrischer Leistung im Inselbetrieb der Generatoren 14 vorhanden ist oder kurzfristig auftreten wird. Liegt kein Engpaß vor, wird entsprechend Abzweigung 0 zurück zur Startsequenz gesprungen. War die Wartezeit im Schritt X noch nicht abgelaufen, wird der Schritt XI übersprungen und direkt zurück zur Startsequenz gesprungen.

Liegt gemäß Abzweigung 1 im Schritt V ein Mangel in der Versorgung des Dampfsammlers 12 vor, wird im Schritt XII zunächst geprüft, ob eine ausreichende Erhöhung der Eigenproduktion an Dampf durch die Dampferzeuger 11 möglich ist. Falls der Mangel durch eine derartige Erhöhung behoben werden kann, wird gemäß Abzweigung 1 zur Startsequenz zurückgesprungen. Ist die Erhöhung im Schritt XII nicht ausreichend, wird gemäß Abzweigung 0 zu Schritt XII gesprungen. Hier erfolgt die Prüfung, ob durch eine Verringerung des Dampfstromes über die Dampfumformstation 17 der Mangel verringert werden kann. Kann trotz Verringern des Dampfstromes über die Dampfumformstation 17 der Mangel nicht behoben werden, erfolgt gemäß Abzweigung 0 im Schritt XIV die Prüfung, ob der Mangel durch Verringern der Lieferung von elektrischer Leistung an das übergeordnete Netz 20 oder Erhöhung des Bezuges an elektrischer Leistung aus dem übergeordneten Netz 20 ausgeglichen werden kann. Hierbei wird die vorgegebene Obergrenze für den Bezug elektrischer Leistung berücksichtigt. Kann damit der Mangel behoben werden, erfolgt gemäß Abzweigung 1 der Sprung zur Startsequenz.

Die Reihenfolge der Prüfungen und die damit verbundenen Maßnahmen entsprechend der Schritte XIII, XIV ist variabel.

Wenn die Behebung des Mangels trotz Verringern der Lieferung bzw. Erhöhung des Bezuges aus dem Netz 20 nicht möglich ist, erfolgt im Schritt XV die Berechnung des verbleibenden Mangels.

In den Schritten XVI, XVII erfolgt die Berechnung der Abschaltschritte. Dieses erfolgt in der Weise, daß entsprechend der dieser Art des Mangels zugeordneten Vorrangprioritätsliste so lange abschaltbare Leistung in aufsteigender Vorrangpriorität addiert wird, bis die berechnete abschaltbare Leistung gleich oder größer dem verbleibenden Mangel oder die maximale Vorrangpriorität erreicht ist. Dieses ist mit der Abzweigung 0 im Schritt XVI erreicht. Im Schritt XVIII werden dann alle so ermittelten Verbraucher gleichzeitig abgeschaltet. Im Schritt XIX wird die Wartezeit gesetzt und angestoßen und anschließend zur Startsequenz gesprungen. Das erfindungsgemäße Verfahren überwacht dann den weiteren Betrieb der Anlage 10, wobei einige der Verbraucher 21, 27, 29 oder Abschaltgruppen 25,26 abgeschaltet sind.

Liegt gemäß Abzweigung 1 im Schritt VII ein Mangel in der Versorgung des Dampfsammlers 15 vor, wird im Schritt XX zunächst geprüft, ob eine ausreichende Erhöhung der Eigenproduktion an Dampf durch den Dampferzeuger 24 möglich ist. Falls der Mangel durch eine derartige Erhöhung behoben werden kann, wird gemäß Abzweigung 1 zur Startsequenz zurückgesprungen. Ist die Erhöhung in Schritt XX nicht ausreichend, wird gemäß Abzweigung 0 zu Schritt XXI gesprungen. Hier erfolgt die Prüfung, ob durch eine Erhöhung des Dampfstromes über das Ventil 17 der Mangel ausgeglichen werden kann. Hierbei wird auch berücksichtigt, ob die Dampferzeuger 11 die dazu notwendige Erhöhung der Eigenproduktion an Dampf zulassen. Kann der Mangel durch Erhöhung des Dampfstromes über das Ventil 17 behoben werden, wird gemäß Abzweigung 1 zur Startsequenz gesprungen. Kann der Mangel trotz Erhöhung des Dampfstromes über das Ventil 17 nicht behoben werden, erfolgt gemäß Abzweigung 0 des Schrittes XXI im Schritt XXII die Berechnung des verbleibenden Mangels.

In den Schritten XXIII, XXIV erfolgt die Berechnung der Abschaltschritte. Dieses erfolgt in der Weise, daß entsprechend der Art des Mangels zugeordneten Vorrangprioritätsliste so lange abschaltbare Leistung in aufsteigender Vorrangpriorität addiert wird, bis die berechnete abschaltbare Leistung gleich oder größer dem verbleibenden Mangel oder die maximale Vorrangpriorität erreicht ist. Dieses ist mit der Abzweigung 0 im Schritt XXIII erreicht. Im Schritt XXV werden dann alle so ermittelten Verbraucher gleichzeitig abgeschaltet. Im Schritt XXVI wird die Wartezeit gesetzt und angestoßen und anschließend zur Startsequenz gesprungen. Das erfindungsgemäße Verfahren überwacht dann den weiteren Betrieb der Anlage 10, wobei einige der Verbraucher 21, 27, 29 oder Abschaltgruppen 25,26 abgeschaltet sind.

Wurde im Schritt IX gemäß Abzweigung 1 ein Mangel an Eigenproduktion an elektrischer Leistung im Verbundbetrieb mit dem übergeordneten Netz 20 erkannt, wird im Schritt XXVII geprüft, ob der Engpaß durch Erhöhung der Eigenproduktion behoben werden kann. Ist dieses erfolgreich, erfolgt gemäß Abzweigung 1 der Rücksprung zur Startsequenz. Andernfalls erfolgt gemäß Abzweigung 0 im Schritt XXVIII die Berechnung des verbleibenden Mangels.

In den Schritten XXIX, XXX erfolgt die Berechnung der Abschaltschritte. Dieses erfolgt in der Weise, daß entsprechend der Art des Mangels zugeordneten Vorrangprioritätsliste so lange abschaltbare Leistung in aufsteigender Vorrangpriorität addiert wird, bis die berechnete abschaltbare Leistung gleich oder größer dem verbleibenden Mangel oder die maximale Vorrangpriorität erreicht ist. Dieses ist mit der Abzweigung 0 im Schritt XXIX erreicht. Im Schritt XXVII werden dann alle so ermittelten Verbraucher gleichzeitig abgeschaltet. Im Schritt XXXII wird die Wartezeit gesetzt und angestoßen und anschließend zur Startsequenz gesprungen. Das erfindungsgemäße Verfahren überwacht dann den weiteren Betrieb der Anlage 10, wobei einige der Verbraucher 21, 27, 29 oder Abschaltgruppen 25,26 abgeschaltet sind.

Wurde im Schritt XI entsprechend Abzweigung 1 ein Inselbetrieb der Generatoren 14 erkannt (Verbindung 19 zum übergeordneten Netz 20 offen), wird im Schritt XXXIII geprüft, ob der Mangel durch Erhöhung der Eigenproduktion an elektrischer Leistung behoben werden kann. Wird damit der Mangel behoben werden, erfolgt der Rücksprung zur Startsequenz. Andernfalls wird gemäß Abzweigung 0 im Folgeschritt XXXIV der verbleibende Mangel berechnet.

In den Schritten XXXV, XXXVI erfolgt die Berechnung der Abschaltschritte. Dieses erfolgt in der Weise, daß entsprechend der Art des Mangels zugeordneten Vorrangprioritätsliste so lange abschaltbare Leistung in aufsteigender Vorrangpriorität addiert wird, bis die berechnete abschaltbare Leistung gleich oder größer dem verbleibenden Mangel oder die maximale Vorrangpriorität erreicht ist. Dieses ist mit der Abzweigung 0 im Schritt XXXV erreicht. Im Schritt XXXVII werden dann alle so ermittelten Verbraucher gleichzeitig abgeschaltet. Im Schritt XXXVII wird die Wartezeit gesetzt und angestoßen und anschließend zur Startsequenz gesprungen. Das erfindungsgemäße Verfahren überwacht dann den weiteren Betrieb der Anlage 10, wobei einige der Verbraucher 21, 27, 29 oder Abschaltgruppen 25,26 abgeschaltet sind.

Das erfindungsgemäße Verfahren überwacht die Anlage 10 solangesich dieses im Modus Automatik befindet. Erfolgte bereits eine Abschaltung von Verbrauchernoder Abschaltgruppen, so werden diese bei weiteren Abschaltungen nicht mehr berücksichtigt. Weitere Abschaltungen wegen Mangel erfolgen, bis auch der letzte abschaltbare Verbraucher in der zugeordneten Vorrangprioritätsliste abgeschaltet ist. Dieses wird dem Bedienpersonal gemeldet, um dieses davon in Kenntnis zu setzen, daß keine weiteren automatischen Abschaltungen erfolgen können.

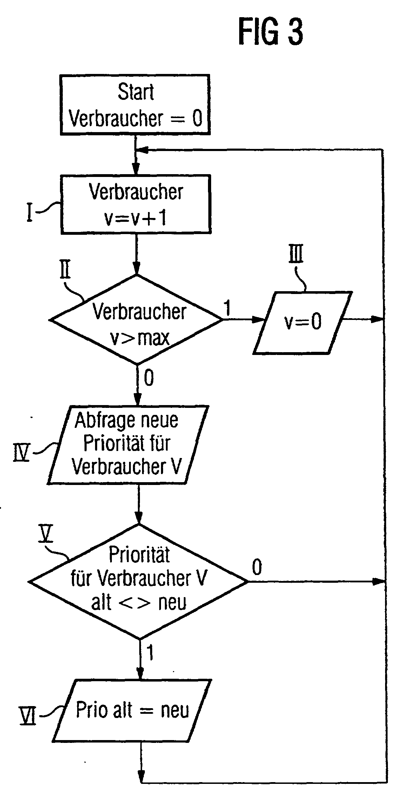

Figur 3 zeigt ein Ablaufschema des Zuweisens der Vorrangpriorität einzelner Verbraucher 21, 27, 29 und Abschaltgruppen 25, 26. Zunächst wird in Schritt I die Nummer des Verbrauchers um "1" erhöht. Im Schritt II wird geprüft, ob die maximale Anzahl von Verbrauchern und Abschaltgruppen überschritten wurde. Ist dieses der Fall, wird die Verbrauchernummer im folgenden Schritt III auf "0" gesetzt und zur Startsequenz zurückgesprungen. Andernfalls erfolgt im Schritt IV die Abfrage der neuen Priorität des angewählten Verbrauchers. Im Schritt V wird geprüft, ob sich die Priorität des angewählten Verbrauchers geändert hat. Ist dieses der Fall, erfolgt im Schritt VI die Zuweisung der neuen Priorität des angewählten Verbrauchers mit anschließendem Rücksprung zur Startsequenz. Wurde im Schritt V keine Veränderung der Priorität festgestellt, wird sofort zur Startsequenz zurückgegangen.

Jedem Verbraucher 21, 27, 29 und jeder Abschaltgruppe 25, 26 wird eine Vorrangpriorität zugewiesen. Falls ein Verbraucher oder eine Abschaltgruppe nicht abgeschaltet werden soll, erhalten diese eine Vorrangpriorität "0".

Das erfindungsgemäße Verfahren ermöglicht erstmals eine Berücksichtigung der Eigenerzeugung und des Eigenverbrauchs von Dampf und elektrischer Leistung einer Anlage 10. Die bisher übliche Orientierung allein an der elektrischen Leistung, die eine Überdimensionierung von Dampferzeugern 11, 24 erforderlich gemacht hat, ist erfindungsgemäß nicht mehr vorgesehen. Hierdurch können die Kosten zum Errichten und beim Betreiben der Anlage wesentlich verringert werden.

**Patentansprüche**

1. Verfahren zum Betrieb einer Anlage (10), die mindestens einen Dampferzeuger (11,24) und mindestens einen Stromerzeuger (13, 14) zum Umwandeln von Dampf in elektrische Leistung sowie mindestens einen Verbraucher (21, 22, 23, 27, 28, 29) von Dampf und/oder elektrischer Leistung aufweist und zum Austausch elektrischer Leistung mit einem übergeordneten Netz (20) verbindbar ist,
   **dadurch gekennzeichnet, daß** zum Vermeiden von Engpässen bei der Versorgung des mindestens einen Verbrauchers (21, 22, 23, 27, 28, 29) die Leistung des mindestens einen Dampferzeugers (11, 24) und die dem mindestens einen Stromerzeuger (13, 14) zugeführte Menge an Dampf verändert wird.

**2.** Verfahren nach Anspruch 1,
**dadurch gekennzeichnet, daß** zum Vermeiden von Engpässen bei der Dampfversorgung die dem mindestens einen Stromerzeuger (13, 14) zugeführte Menge an Dampf verringert wird.

**3.** Verfahren nach Anspruch 1 oder 2,
**dadurch gekennzeichnet, daß** zum Vermeiden von Engpässen bei der Stromversorgung die Lieferung elektrischer Leistung an das übergeordnete Netz (20) verringert oder der Bezug elektrischer Leistung aus dem übergeordneten Netz (20) erhöht wird.

**4.** Verfahren nach einem der Ansprüche 1 bis 3,
**dadurch gekennzeichnet, daß** Verbraucher (22, 23, 28) in einer Abschaltgruppe (25, 26) zusammengefaßt werden.

**5.** Verfahren nach einem der Ansprüche 1 bis 4,
**dadurch gekennzeichnet, daß** zum Vermeiden von Engpässen einer oder mehrere Verbraucher (21, 22, 27, 29) bzw. Abschaltgruppen (25, 26) von Dampf und/oder elektrischer Leistung abgeschaltet werden.

**6.** Verfahren nach einem der Ansprüche 1 bis 5,
**dadurch gekennzeichnet, daß** nach Art und Ort des Mangels angepaßt mehrere Vorrangprioritätenlisten realisiert sind.

**7.** Verfahren nach Anspruch 6,
**dadurch gekennzeichnet, daß** jedem Verbraucher (21, 27, 29) und/oder jeder Abschaltgruppe (25, 26) in jeder Vorrangprioritätenliste eine Vorrangpriorität bei der Versorgung mit Dampf und/oder elektrischer Leistung zugewiesen wird.

**8.** Verfahren nach Anspruch 7,
**dadurch gekennzeichnet, daß** die Vorrangpriorität eines oder mehrerer Verbraucher (21, 27, 29) und einer oder mehrerer Abschaltgruppen (25, 26) im laufenden Betrieb der Anlage (10) veränderbar ist.

**9.** Verfahren nach einem der Ansprüche 4 bis 8,
**dadurch gekennzeichnet, daß** sämtliche abzuschaltenden Verbraucher (21, 27, 29) und Abschaltgruppen (25, 26) gleichzeitig abgeschaltet werden.

**10.** Verfahren nach einem der Ansprüche 1 bis 9,
**dadurch gekennzeichnet, daß** der Bezug von elektrischer Leistung aus dem übergeordneten Netz (20) begrenzt wird.

**11.** Verfahren nach einem der Ansprüche 4 bis 10,
**dadurch gekennzeichnet, daß** nach dem Abschalten eines oder mehrerer Verbraucher (21, 27, 29) und/oder Abschaltgruppen (25, 26) ein manuelles Quittieren der Abschaltbefehle für ein erneutes Anschalten erforderlich ist.

**Claims**

**1.** Method for operation of an installation (10) which has at least one steam generator (11, 24) and at least one electricity generator (13, 14) for conversion of steam to electrical power, and has at least one consumer (21, 22, 23, 27, 28, 29) of steam and/or electrical power and can be connected to a higher-level network (20) for exchanging electrical power,
**characterized in that**
the power of the at least one steam generator (11, 24) and the amount of steam supplied to the at least one electricity generator (13, 14) are varied in order to avoid bottlenecks in the supply of the at least one consumer (21, 22, 23, 27, 28, 29).

**2.** Method according to Claim 1,
**characterized in that**
the amount of steam supplied to the at least one electricity generator (13, 14) is reduced in order to avoid bottlenecks in the steam supply.

3. Method according to Claim 1 or 2,
   **characterized in that**
   the supply of electrical power to the higher-level network (20) is reduced or the consumption of electrical power from the higher-level network (20) is increased in order to reduce bottlenecks in the electricity supply.

4. Method according to one of Claims 1 to 3,
   **characterized in that**
   consumers (22, 23, 28) are combined in a disconnection group (25, 26).

5. Method according to one of Claims 1 to 4,
   **characterized in that**
   one or more consumers (21, 22, 27, 29) or disconnection groups (25, 26) are disconnected from the steam and/or electrical power in order to avoid bottlenecks.

6. Method according to one of Claims 1 to 5,
   **characterized in that**
   a plurality of priority lists are produced, matched to the nature and the location of the shortage.

7. Method according to Claim 6,
   **characterized in that**
   a priority for the supply of steam and/or electrical power is assigned to each consumer (21, 27, 29) and/or to each disconnection group (25, 26) in each priority list.

8. Method according to Claim 7,
   **characterized in that**
   the priority of one or more consumers (21, 27, 29) and of one or more disconnection groups (25, 26) can be varied during the course of operation of the installation (10).

9. Method according to one of Claims 4 to 8,
   **characterized in that**
   all of the consumers (21, 27, 29) and disconnection groups (25, 26) to be disconnected are disconnected at the same time.

10. Method according to one of Claims 1 to 9,
    **characterized in that**
    the consumption of electrical power from the higher-level network (20) is limited.

11. Method according to one of Claims 4 to 10,
    **characterized in that**,
    after the disconnection of one or more consumers (21, 27, 29) and/or disconnection groups (25, 26), manual acknowledgement of the disconnection commands is required for renewed connection.

**Revendications**

1. Procédé pour l'exploitation d'une centrale (10), qui comporte au moins un générateur de vapeur (11, 24) et au moins un générateur de courant (13, 14) pour la transformation de vapeur en puissance électrique ainsi qu'au moins un consommateur (21, 22, 23, 27, 28, 29) de vapeur et/ou de puissance électrique et qui peut être reliée à un réseau supérieur (20) pour l'échange de puissance électrique,
   **caractérisé par le fait que**, pour éviter des goulots d'étranglement lors de l'alimentation du ou des consommateurs (21, 22, 23, 27, 28, 29), la puissance du ou des générateurs de vapeur (11, 24) et la quantité de vapeur envoyée au ou aux générateurs de courant (13, 14) sont modifiées.

2. Procédé selon la revendication 1,
   **caractérisé par le fait que**, pour éviter des goulots d'étranglement lors de l'alimentation en vapeur, la quantité de vapeur envoyée au ou aux générateurs de courant (13, 14) est réduite.

**3.** Procédé selon la revendication 1 ou 2,
**caractérisé par le fait que**, pour éviter des goulots d'étranglement lors de l'alimentation en courant, la fourniture de puissance électrique au réseau supérieur (20) est réduite ou l'extraction de puissance électrique du réseau supérieur (20) est augmentée.

**4.** Procédé selon l'une des revendications 1 à 3,
**caractérisé par le fait que** des consommateurs (22, 23, 28) sont réunis dans un groupe de coupure (25, 26).

**5.** Procédé selon l'une des revendications 1à 4,
**caractérisé par le fait que**, pour éviter des goulots d'étranglement, un ou plusieurs consommateurs (21, 22, 27, 29) ou groupes de coupure (25, 26) consommant de la vapeur et/ou de la puissance électrique sont coupés.

**6.** Procédé selon l'une des revendications là 5,
**caractérisé par le fait que** plusieurs listes de priorités sont réalisées en fonction du type et de l'endroit du manque.

**7.** Procédé selon la revendication 6,
**caractérisé par le fait qu'**il est attribué à chaque consommateur (21, 27, 29) et/ou à chaque groupe de coupure (25, 26), dans chaque liste de priorités, une priorité lors de l'alimentation en vapeur et/ou en puissance électrique.

**8.** Procédé selon la revendication 7,
**caractérisé par le fait que** la priorité d'un ou plusieurs consommateurs (21, 27, 29) et d'un ou plusieurs groupes de coupure (25, 26) peut être modifiée au cours de l'exploitation de la centrale (10).

**9.** Procédé selon l'une des revendications 4 à 8,
**caractérisé par le fait que** tous les consommateurs à couper (21, 27, 29) et groupes de coupure à couper (25, 26) sont coupés en même temps.

**10.** Procédé selon l'une des revendications 1 à 9,
**caractérisé par le fait que** l'extraction de puissance électrique du réseau supérieur (20) est limitée.

**11.** Procédé selon l'une des revendications 4 à 10,
**caractérisé par le fait que**, après la coupure d'un ou plusieurs consommateurs (21, 27, 29) et/ou groupes de coupure (25, 26), une confirmation manuelle des instructions de coupure est nécessaire pour une nouvelle mise en service.

# FIG 1

# FIG 2A

# FIG 2B

von Fig. 2A                                                                zu Fig. 2A

VIII

Wartezeit
Verbund — 0

IX ── 1

el. Verbund — 0

X ── 0
Wartezeit
Insel — 1

XI
el. Insel — 0

XXVII ── 1
Ausgl.
Eigenprod. — 1

XXIII ── 1
Ausgl.
Eigenprod. — 1

XXVIII
Berechnung verbleibender Mangel

XXXIV
Berechnung verbleibender Mangel

XXIX
Mangel
>Σ Absch. — 0

XXXI
Absch. Prio
a bis b
a=b

XXX ── 1
Priorität
a=a+1

XXXV
Mangel
>Σ Absch. — 0

XXXVI ── 1
Priorität
a=a+1

XXXVII
Absch. Prio
a bis b
a=b

setze Wartezeit
Verbund

XXXII

XXXVIII
setze Wartezeit
Insel

# FIG 3

```
        ┌─────────────────┐
        │      Start       │
        │ Verbraucher = 0  │
        └─────────────────┘
                 │
                 ▼
        ┌─────────────────┐
   I─   │   Verbraucher    │
        │    v=v+1         │
        └─────────────────┘
                 │                        III
                 ▼                         │
              ╱───────╲                ╱────────╲
             ╱ Verbraucher ╲    1     ╱          ╲
            ╱   v > max     ╲───────▶ ╱   v = 0   ╱
             ╲            ╱            ╲          ╱
              ╲─────────╱               ╲──────╱
                 │ 0
                 ▼
            ╱──────────────╲
  IV─     ╱ Abfrage neue   ╱
         ╱   Priorität für ╱
        ╱  Verbraucher V  ╱
         ╲──────────────╱
                 │
                 ▼
          ╱─────────────╲
    V    ╱   Priorität    ╲      0
        ╱ für Verbraucher V ╲───────▶
         ╲  alt < > neu   ╱
          ╲─────────────╱
                 │ 1
                 ▼
          ╱────────────────╲
  VI─    ╱  Prio alt = neu  ╱
          ╲────────────────╱
```